# EUROPÄISCHE PATENTSCHRIFT

(11) **EP 0 491 734 B1**
(45) Veröffentlichungstag und Bekanntmachung des Hinweises auf die Patenterteilung: **26.10.1994**
(21) Anmeldenummer: 90912772.2
(22) Anmeldetag: 06.09.1990
(51) Int. Cl.: G01B 21/04, G01B 3/30

(54) **PRÜFKÖRPER FÜR KOORDINATENMESSGERÄTE AUS STABSEGMENTEN**
TEST SPECIMENS COMPOSED OF ROD SEGMENTS FOR CO-ORDINATE MEASURING INSTRUMENTS
EPROUVETTES DU TYPE BARREAU POUR APPAREILS DE MESURE DE COORDONNEES

(30) Priorität: 11.09.1989 DE 3930223
(43) Veröffentlichungstag der Anmeldung: 01.07.1992
(73) Patentinhaber: LEITZ MESSTECHNIK GMBH, D-35530 Wetzlar (DE)
(72) Erfinder: WÄLDELE, Franz, D-3300 Braunschweig (DE); TRAPET, Eugen, D-3300 Braunschweig (DE)
(86) Internationale Anmeldenummer: DE9000676
(87) Internationale Veröffentlichungsnummer: WO9103706

(56) Entgegenhaltungen:
- DE-C- 863 848
- DE-C- 3 504 464
- GB-A- 643 828
- US-A- 2 409 817
- Technisches Messen, Band 51, Nr. 3, März 1984, (München, DE), H.-H. Schüssler: "Prüfkörper für Koordinatenmessgeräte, Werkzeugmaschinen und Messroboter", Seiten 83-95

## Beschreibung

In der industriellen Qualitätssicherung werden zunehmend Koordinatenmeßgeräte fertigungsnah und auch bereits fertigungsintegriert eingesetzt. Ebenso wie in Meßräumen besteht für die Betreiber der Meßgeräte die Notwendigkeit, im Rahmen der Betriebsmittelüberwachung für die Einhaltung der zulässigen Meßunsicherheit zu sorgen. Nur durch regelmäßige Überwachungsmessungen kann dies sichergestellt werden. Für die dazu erforderlichen Messungen hat sich der Einsatz von Prüfkörpern in den letzten Jahren durchgesetzt. Als Gründe hierfür können insbesondere die einfache und schnelle Durchführbarkeit der Überwachung mittels Prüfkörper angeführt werden: Gesichtspunkte, die im Fertigungsumfeld sehr wichtig sind.

Im Prinzip werden bei diesem Überwachungsverfahren die mit dem zu prüfenden Koordinatenmeßgerät ermittelten Abmessungen mit den entsprechenden kalibrierten Meßwerten verglichen. Dabei wird überprüft, ob die Meßabweichungen innerhalb der spezifizierten Genauigkeitsgrenzen liegen. Die Beschreibung eines Überwachungsverfahrens ist z. B. in dem Entwurf zur VDI/BDE-Richtlinie 2617 "Überwachung von Koordinatenmeßgeräten durch Prüfkörper" gegeben.

Prüfkörper, die ein-, zwei- oder dreidimensional aufgebaut sind, existieren bereits. Eine Übersicht in dem Beitrag "Prüfkörper für Koordinatenmeßgeräte, Werkzeugmaschinen und Meßroboter" von H.-H. Schüßler in Technisches Messen 51. Jahrgang 1984, Heft 3 stellt den derzeitigen Stand der Technik dar. Schwierigkeiten bei der Handhabung bei gleichzeitig großen Abmessungen und bei der Kalibrierung der Prüfkörper wegen zu großer Massen beschränken ihren Einsatz auf Koordinatenmeßgeräte mit in der Regel Meßvolumina kleiner 1 m³. Die Grenzen der Abmessungen bei existierenden Prüfkörpern liegen für eindimensionale Bauweise bei 2500 mm und für zwei- oder dreidimensionale Bauweise bei etwa 800 mm für die größte Seitenlänge.

Es ist Aufgabe der vorliegenden Erfindung, Prüfkörper vorzuschlagen, die sich auch für die Überwachung von Koordinatenmeßgeräten mit großen Meßvolumina eignen und dabei gleichzeitig eine gute Handhabbarkeit und eine einfache und sichere Kalibrierung gewährleisten.

Diese Aufgabe wird erfindungsgemäß durch die kennzeichnenden Merkmale des Patentanspruchs 1 gelöst. Vorteilhafte Weiterbildungen sind Gegenstand der Unteransprüche. Hierbei sind solche Prüfkörper vorteilhaft, welche vom Anwender unter Beibehaltung der Genauigkeit demontiert und wieder zusammengefügt werden können. Die Prüfkörper bestehen aus Referenzelementen, welche durch Stabverbindungen in definiertem Abstand gehalten werden. Damit lassen sich ein-, zwei- und dreidimensionale Strukturen (Prüfkörper) aufbauen. Die Referenzelemente sind derart ausgeführt, daß deren Lage eindeutig vom zu prüfenden Koordinatenmeßgerät erfaßt werden können.

Als Referenzelemente eignen sich Kugeln, z.B. Präzisionskugeln aus Industriekeramik. Stäbe können z.B. aus Invar, Zerodur oder Kohlenstoffaserverbundwerkstoff gefertigt sein.

Erfindungsgemäß wird eine hochgenau reproduzierbare Verbindung von Stäben und Kugeln durch ein genaues Bearbeiten der Stabenden mit den Kugelradien (z.B. CNC-Bearbeitung und anschließendes Läppen mit Kugein von gleichem Radius) erreicht. Kugeln und Stäbe werden mitteis Federkraft zusammengedrückt; hierbei entsteht eine Maßhaltigkeit der Gesamtstruktur, welche vergleichbar mit der von aus einem Stück gefertigten Prüfkörpern ist. Der Vorteil sphärischer und damit großer Berührflächen liegt in der relativen Unempfindlichkeit des Übergangsmaßes gegenüber variierenden Andruckkräften. Solche variierenden Kräfte sind im Einsatz sowie bei der Kalibrierung unvermeidlich, falls der Prüfkörper für ein wiederholtes Demontieren und Zusammenfügen vorgesehen ist.

Unterschiedliche Ausführungen der federnden Elemente an den Verbindungsstellen zwischen den Referenzelementen und den Stäben sind erfindungsgemäß möglich, und zwar:
- durch elastische Klammern, welche von außerhalb der Stäbe und Referenzelemente diese zusammendrücken (eine Klammer für jeden Übergang oder auch für mehrere möglich),
- durch Federn, die im Inneren der Stäbe und/oder der Referenzelemente liegen und beide zusammenziehen,
- durch Federn, welche gegenüber einem Tragkörper wirken.

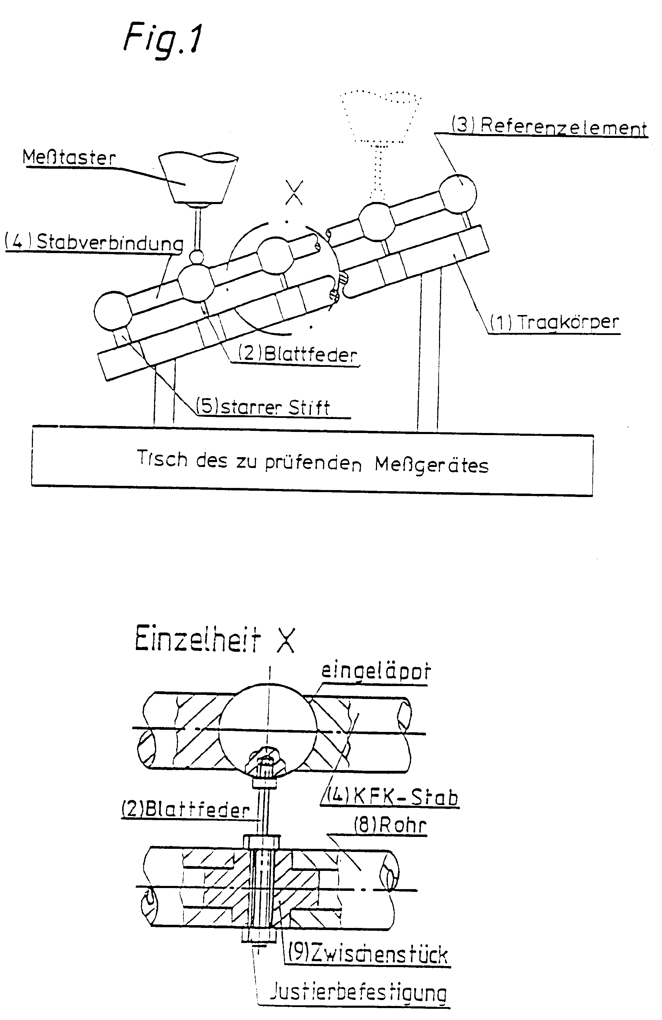

Fig. 1 zeigt die erfindungsgemäße Realisierung eines eindimensonalen Prüfkörpers. Dieser besteht aus einem segmentierten, demontierbaren Tragkörper (1), auf dem mit Hilfe von Blattfedern (2) Kugeln als Referenzelemente (3) befestigt sind sowie aus Kohlenstoffaserstäben (4), die zwischen den Kugeln eingeklemmt sind. Eine Kugel ist zur Festlegung des Bezugspunkts anstatt mit einer Blattfeder mit einem starren Stift (5) auf dem Tragkörper angebracht. Die Federn erlauben nur eine Verschiebung der Kugeln in Achsrichtung der Stäbe und sind so vorgespannt, daß näherungsweise die Andruckkräfte an allen Übergangssteilen gleich groß sind. Der Tragkörper ist modular aufgebaut. In Fig. 1 ist seine Ausführung aus Rohren (8) und Zwischenstücken (9) gezeigt. Die Zwischenstücke tragen die Referenzelemente und sind mit den Rohren über Klemmverbindungen zusammengefügt.

Die Kalibrierung der Stab-Kugel-Kombinationen kann einzeln erfolgen. Da Kugeln einer Fertigungscharge sehr eng toleriert den gleichen Durchmesser besitzen, darf die Kalibrierung aller Stäbe in Kombination mit dem gleichen Kugelpaar geschehen. Erfindungsgemäß ist die Genauigkeit und Stabilität des Tragkörpers von untergeordneter Bedeutung, da allein die Abstände zwischen jeweils zwei benachbarten Kugeln auswertet werden, und die Stabachsen mit den Kugelmittelpunkten eine Linie bilden. Obwohl der eindimensionale, segmentierte Prüfkörper in Teillängen kalibriert wird, entspricht der Gesamtfehler der Kalibrierung dem Fehler, der für einen unsegmentierten Prüfkörper entsprechender Gesamtlänge bei einer einzigen Längenmessung entstehen würde. Der Grund dafür ist, daß der Fehler bei der Bestimmung eines Kugelmittelpunktes sich für beide der Kugel benachbarte Teilstrecken betragsmäßig gleich, aber im Vorzeichen umgekehrt auswirkt. Eine Fehlerakkumulation findet also nicht statt.

Fehler, die durch eine variierende bzw. nicht exakte Fluchtung der Kugelmittelpunkte entstehen, sind i.a. vernachlässigbar. Sie stellen jeweils den Cosinusfehler in der Längenbestimmung eines Segments dar, der durch den orthogonal zur Prüfkörperachse wirksamen Fehler des geprüften Koordinatenmeßgerätes entsteht.

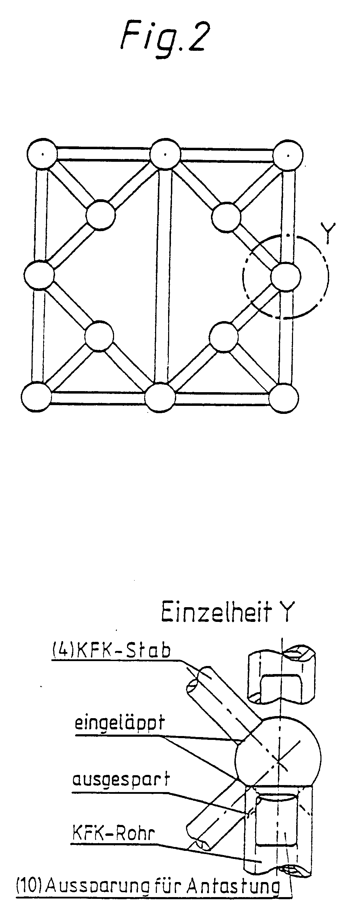

Fig. 2 zeigt beispielhaft die Ausführung eines zweidimensionalen Prüfkörpers. Da die Oberflächen einzelner Referenzelemente durch die Anbringung der Stäbe zum großen Teil verdeckt sind, müssen bestimmte Stäbe eine Aussparung (10) besitzen, die eine Antastung der Referenzelemente ermöglicht.

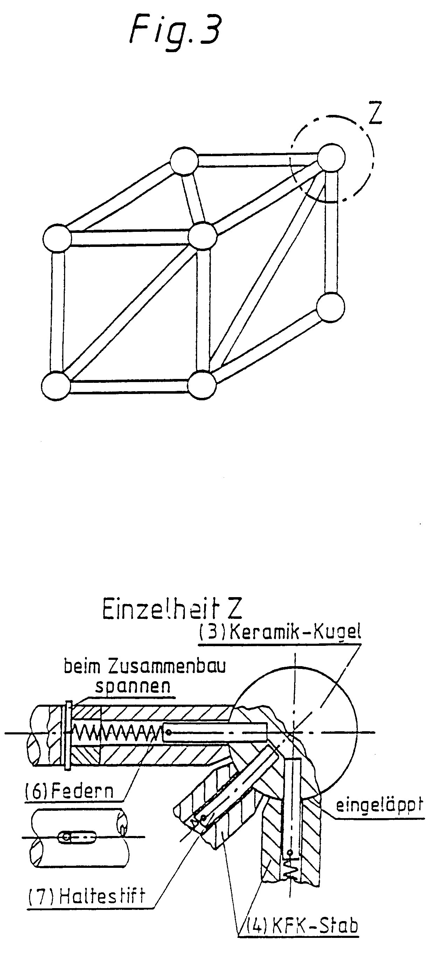

Fig. 3 stellt die erfindungsgemäße Ausführung eines dreidimensionalen Prüfkörpers in Form eines Quaders dar. Die Kohlenstoffaserstäbe (4) bilden hier mit den Keramikkugeln (3) sowohl die maßbildende als auch die tragende Struktur, da die Eckpunkte eines Quaders durch 18 Strecken, welche hier 18 Stäben (4) entsprechen, eindeutig festliegen. Somit ist die direkte Anbringung der Andruckfedern (6) zwischen Kugeln und Stäben sinnvoll. Die Andruckfedern sind hier in den Stäben angebracht. In die Kugeln eingeklebte Stifte (7) dienen zur Anbringung dieser Federn an den Kugeln und haben außerdem die Aufgabe, den Quader beim Handhaben und Montieren zu stabilisieren. Im meßbereiten Zustand berühren die Stifte (7) die Bohrungswandungen in den Stäben nicht.

Die wesentlichen Vorteile eines solchen Quaders liegen in dem vereinfachten Transport im demontierten Zustand sowie in der guten Kalibrierbarkeit der eindimensionalen Teilstrukturen. Quader bis ca. 2 m sind gut handhabbar. Möglicherweise müssen bei größeren zu prüfenden Meßvolumina Anschlußmessungen mit mehrfach verschobenen Quadern durchgeführt werden.

Als Wirtschaftlichkeitsaspekte können für die erfindungsgemäße Konstruktion eines Prüfkörpers in segmentierter Stabbauweise angeführt werden:
- kostengünstige Herstellung aus marktgängigen Komponenten
- leichte Bauweise aufgrund der Verwendung von Stabstrukturen für die maßbestimmenden Komponenten
- wirtschaftlicher Einsatz hochwertiger Werkstoffe, wegen des geringen Materialeinsatzes
- sicheres Messen (und damit Reduktion von Ausschuß) durch die Verwendung hochwertiger Werkstoffe, die in der Fertigungsumgebung temperaturstabil sind
- vereinfachte Kalibrierung hoher Genauigkeit, da die Messungen separat für die eindimensionalen Teilsegmente auf entsprechend kleinen, hochgenauen Referenzmeßgeräten (z.B. Komparator mit Laserinterferometer) durchgeführt werden können
- einfacher Transport
- gute Handhabbarkeit.

Diese Faktoren tragen dazu bei, daß die regelmäßig notwendigen Überwachungsmessungen mittels Prüfkörpern an Meßgeräten schnell und einfach, d.h. kostengünstig, sowie sicher durchgeführt werden können, wobei auch Meßgeräte mit großen Meßvolumina mit einbezogen sind. Die erfindungsgemäße Bauweise der Prüfkörper eröffnet nun ihren Einsatz auch bei fertigungsnah und fertigungsintegriert eingesetzten Meßgeräten.

## Patentansprüche

1. Prüfkörper für Koordinatenmeßgeräte, mit als Kugeln ausgebildeten, anzutastenden Referenzelementen (3) und mit längenstabilen Stabsegmenten (4), die über die Kugeln miteinander verbundenen sind, dadurch gekennzeichnet, daß die anzutastenden Referenzelemente (3) an den Stabsegmenten (4) lösbar befestigt sind.

2. Prüfkörper nach Anspruch 1, dadurch gekennzeichnet, daß die Kontaktflächen der Stabsegmente (4) zu den Kugeln (3) mit dem gleichen Radius wie die Kugeln (3) sphärisch ausgebildet sind.

3. Prüfkörper nach Anspruch 1 oder 2, dadurch gekennzeichnet, daß zur lösbaren Befestigung der Kugeln (3) mit den Stabsegmenten (4) erste federnde Elemente (6) vorgesehen sind, die (6) die Kugeln (3) mit den Stabsegmenten (4) mit definierter Andruckkraft verbinden.

4. Prüfkörper nach Anspruch 3, dadurch gekennzeichnet, daß die ersten federnden Elemente (6) im Innern der Stabsegmente (4) eingelassen und fixiert sind und jede Kugel (3) mindestens einen Stift (7) zur Befestigung der ersten federnden Elemente (6) aufweist.

5. Prüfkörper nach Anspruch 3 oder 4, dadurch gekennzeichnet, daß die die ersten federnden Elemente (6) als Klammern ausgebildet sind.

6. Prüfkörper nach Anspruch 1 oder 2, dadurch gekennzeichnet, daß ein zusätzlicher Tragkörper (1) vorgesehen ist, der einzelne miteinander lösbar befestigte Rohre (8) und Zwischenstücke (9) aufweist.

7. Prüfkörper nach Anspruch 6, dadurch gekennzeichnet, daß die Zwischenstücke (9) je ein zweites federndes Element (2), vorzugsweise eine Blattfeder (2), aufweisen und an diesem zweiten Element (2) das Referenzelement (3) angeordnet ist.

8. Prüfkörper nach Anspruch 7, dadurch gekennzeichnet, daß die lösbare Befestigung der Kugeln (3) mit den Stabsegmenten (4) als Klemmung ausgebildet ist.

9. Prüfkörper nach Ansprüche 1 - 8, dadurch gekennzeichnet, daß die Kugeln (3) mit den Stabsegmenten (4) als zweidimensionaler Körper in X- und Y- Richtung angeordnet sind.

10. Prüfkörper nach Ansprüche 1 - 8, dadurch gekennzeichnet, daß die Kugeln (3) mit den Stabsegmenten (4) als dreidimensionaler Körper in X-, Y- und Z-Richtung angeordnet sind.

## Claims

1. Test specimen for co-ordinate measuring instruments, comprising feelable reference elements (3) formed as balls and longitudinally rigid rod segments (4) which are connected together by way of the balls, characterised thereby that the feelable reference elements (3) are detachably fastened to the rod segments (4).

2. Test specimen according to claim 1, characterised thereby that the contact surfaces of the rod segments (4) at the balls (3) are spherically formed with the same radius as the balls (3).

3. Test specimen according to claim 1 or 2, characterised thereby that first resilient elements (6), which connect the balls (3) with the rod segments (4) with defined pressing force, are provided for the detachable fastening of the balls (3) to the rod segments (4).

4. Test specimen according to claim 3, characterised thereby that the first resilient elements (6) are let into and fixed in the interiors of the rod segments and each ball (3) has at least one pin (7) for the fastening of the first resilient elements (6).

5. Test specimen according to claim 3 or 4, characterised thereby that the first resilient elements (6) are constructed as clamps.

6. Test specimen according to claim 1 or 2, characterised thereby that an additional bearing body (1), which has tubes (8) and spacer members (9) individually fastened together, is provided.

7. Test specimen according to claim 6, characterised thereby that the spacer members (9) each comprise a second resilient element (2), preferably a leaf spring (2), and the reference element (3) is arranged at this second element (2).

8. Test specimen according to claim 7, characterised thereby that the detachable fastening of the balls (3) with the rod segments (4) is formed as a clamping.

9. Test specimen according to claim 1 to 8, characterised thereby that the balls (2) together with the rod segments (4) are arranged as a two-dimensional specimen in X-direction and Y-direction.

10. Test specimen according to claims 1 to 8, characterised thereby that the balls (3) together with the rod segments (4) are arranged as a three-dimension specimen in X-direction, Y-direction and Z-direction.

## Revendications

1. Corps de test pour des appareils de mesure de coordonnées, avec des éléments de référence à palper (3) réalisés sous forme de billes et avec des segments de tige (4) stables en longueur qui sont reliés les uns aux autres par les billes, caractérisé en ce que les éléments de référence à palper (3) sont montés amoviblement sur les segments de tige (4).

2. Corps de test selon la revendication 1, caractérisé en ce que les faces de contact des segments de tige (4) aux billes (3) sont réalisées de manière sphérique avec le même rayon que les billes (3).

3. Corps de test selon la revendication 1 ou 2, caractérisé en ce que pour la fixation amovible des billes (3) aux segments de tige (4), des premiers éléments élastiques (6) sont prévus qui relient les billes (3) aux segments de tige (4) avec une force d'application définie.

4. Corps de test selon la revendication 3, caractérisé en ce que les premiers éléments élastiques (6) sont insérés dans l'intérieur des segments de tige (4) et sont fixés, et que chaque bille (3) présente au moins une goupille (7) pour fixer les premiers éléments élastiques (6).

5. Corps de test selon la revendication 3 ou 4, caractérisé en ce que les premiers éléments élastiques (6) sont réalisés sous forme de pinces.

6. Corps de test selon la revendication 1 ou 2, caractérisé en ce qu'il est prévu un corps de support additionnel (1) qui présente des tuyaux (8) individuels fixés amoviblement les uns aux autres et des pièces intermédiaires (9).

7. Corps de test selon la revendication 6, caractérisé en ce que les pièces intermédiaires (9) présentent respectivement un deuxième élément élastique (2), de préférence un ressort à lame (2) et que l'élément de référence (3) est disposé à ce deuxième élément (2).

8. Corps de test selon la revendication 7, caractérisé en ce que la fixation amovible des billes (3) avec les segments de tige (4) est réalisée sous forme de serrage.

9. Corps de test selon les revendications 1 à 8, caractérisé en ce que les billes (3) avec les segments de tige (4) sont disposées comme corps bidimensionnel dans les directions X et Y.

10. Corps de test selon les revendications 1 à 8, caractérisé en ce que les billes (3) avec les segments de tige (4) sont disposées comme corps tridimensionnel dans les directions X, Y et Z.
